# EUROPEAN PATENT APPLICATION

(11) **EP 0 899 721 A1**
(43) Date of publication of application: **03.03.1999**
(21) Application number: 98902761.0
(22) Date of filing: 12.02.1998
(51) Int. Cl.: G11B 5/02

(54) **MAGNETIC RECORDING METHOD**

(30) Priority: 17.02.1997 JP 32478/97
(71) Applicant: SEIKO EPSON CORPORATION, Shinjuku-ku, Tokyo 163-0811 (JP)
(72) Inventor: ISHIDA, Masaya, Suwa-shi Nagano-ken 392-8502 (JP); IDE, Tsugio, Suwa-shi Nagano-ken 392-8502 (JP); KATSUYAMA, Takanobu, Suwa-shi Nagano-ken 392-8502 (JP); NEBASHI, Satoshi, Suwa-shi Nagano-ken 392-8502 (JP)
(74) Representative: Sturt, Clifford Mark
(86) International application number: JP9800593
(87) International publication number: WO9836409

(57) **Abstract**

By combining a micro-regional heating means, a coil (22) for applying a magnetic field, a magneto-resistive element, and a recording film including a secondary recording layer (14), magnetic recording and reproducing with higher recording density has been achieved. In a method for magnetic recording and reproducing, in which information recording is performed by thermomagnetic recording, and information reproduction is detected in response to a change in magnetic flux from a recording magnetic domain, as a means for detecting a change in magnetic flux, a magneto-resistive element is used, and as a heating means for thermomagnetic recording, a solid immersion lens, evanescent light, or an electric current flowing between a probe and a recording medium is used. The recording medium includes at least a substrate and a recording film, and the recording film includes a recording layer and a secondary recording layer. The substrate is composed of silicon or silicon oxide.

## Description

### Technical Field

The present invention relates to a method of magnetic recording, and in particular relates to a method of magnetic recording in which information is recorded with high density.

### Background Art

High-density recording methods that use magnetism include a magnetic recording method and a magneto-optical recording method. Although, in both methods, recording of magnetic information is performed into a magnetic substance as a magnetic domain, there are large differences with respect to the way in which recording and reproducing are performed. In the magnetic recording method, recording is performed in a magnetic field generated by a magnetic head by bringing the micro-sized magnetic head extremely close to a recording layer, and information reproduction is performed by detecting a change in magnetic flux from the recording layer. In order to increase recording density in magnetic recording, the size of a magnetic head must be reduced and placed extremely close to a recording layer. The characteristics of magnetic recording include high track recording density. Although the track recording density is restricted by the reversion rate of the magnetic field, currently a magnetic domain length of 0.1 µm or less is easily obtained. On the other hand, a track width is restricted to approximately 1 µm for the time being. Positional accuracy of the head in the direction of the track is one of the factors behind the above, however, that is not considered as an essential problem. The essential factors which restrict the track width include an effective decrease in the track width because of recording blur (side erase or side fringe) which occurs on both sides of the recording track in a range of approximately 0.3 µm, and a decrease in output of playback signals because of a decrease in the width of a recording magnetic domain. With respect to the decrease in playback signal output, since the development of magneto-resistive elements or giant magneto-resistive elements has advanced, an increase in the output has been achieved and a change in magnetic flux from a smaller magnetic domain can be detected. However, with respect to recording blur, although various attempts have been made, it remains unsolved. Although recording density in the magnetic recording method is improving gradually, it is not easy to increase recording density in the direction of the track width, which restricts realization of high-density magnetic recording.

On the other hand, in the magneto-optical recording method, recording is performed by partially heating a recording layer by focusing a laser beam, and at the same time by applying a magnetic field to form a magnetic domain in that region. Also, information reproduction is performed by radiating a linearly polarized laser beam onto a recording layer and by detecting the rotation of the plane of polarization which corresponds to the magnetic direction. In the magneto-optical recording, density is increased by decreasing a spot size of the laser beam focused onto the recording layer. Since the laser spot is proportional to λ/NA (λ: laser wavelength, NA: numerical aperture of objective), if the laser wavelength is reduced and NA is increased, the spot diameter decreases, however, the diameter is not easily reduced to 0.35 µm or less. Decrease in the spot diameter has been attempted by achieving NA > 1 by using a solid immersion lens (SIL), that is, a doublet. However, it is significantly difficult to detect playback signals satisfactorily from a magnetic domain having a diameter of approximately 0.35 µm. When NA has such a large value, more precise adjustment of the optical system is required. Also, because the spot diameter decreases and the resolving power improves, further smoothness and controllability are required for substrates, guide grooves, and the like. Currently, even if the spot diameter is decreased, the reproduction of a signal having a high S/N is difficult. Also, it is not easy to decrease the spot diameter to 0.35 µm or less. Although it may be possible to decrease the spot diameter at the expense of magneto-optical recording properties such as replaceability of media, it is considered not to be easy to achieve the reproduction of signals having a high S/N. Also, although it may be possible to obtain playback signals having a high S/N by using a recording layer having a high magneto-optical effect, currently there is not a group of materials which has a significantly high magneto-optical effect, and it is difficult to achieve extremely high-density magneto-optical recording in terms of reproduction.

In both magnetic recording and magneto-optical recording methods, recording density has increased year by year, and this tendency is expected to continue. From a technical basis, however, magnetic domain information cannot currently be recorded and reproduced in a size of 0.2 µm square, and 0.04 µm² or less by area. In the magnetic recording method, it is difficult to increase density in the direction of the track width, and in the magneto-optical recording method, it is difficult to increase recording density since signal output decreases when a micro magnetic domain is reproduced.

### Disclosure of Invention

In a method of magnetic recording in accordance with the present invention, information is recorded by thermomagnetic recording into a recording medium having a recording film including a substrate and a magnetic layer, in which the width of a heating region per one track is set at 0.35 µm or less in the recording medium to record the information. With the characteristics described above, recording can be satisfactorily performed into a significantly micro-sized magnetic domain of 0.2 µm square or less, which was not achievable by a magnetic recording method or a magneto-optical recording method The size is significantly narrower than a track width which is achievable in magnetic recording, and also significantly narrower than a recording magnetic domain length which is achievable in magneto-optical recording. Extremely high-density recording, which cannot be achieved by magnetic recording or magneto-optical recording alone, is achievable. Since the recording film includes two magnetic layers, that is, a recording layer and a secondary recording layer, reproduction from a medium which has been recorded with high density by thermomagnetic recording is enabled for the first time. The secondary recording layer is essential in order to stably perform thermomagnetic recording, and is effective in stability of a magnetic domain and in decreasing a magnetic field required for recording with respect to high-density recording with a track width of the recording medium of 0.35 µm or less. Also, preferably, the following formula is satisfied: Tc1 < Tc2, wherein Tc1 represents the Curie temperature of the recording layer, and Tc2 represents the Curie temperature of the secondary recording layer.

Also, since the magnetization intensity of the recording layer is 200 emu/cc or more, information can be reproduced satisfactorily also from a high-density recording magnetic domain with a track width of 0.35 µm or less. When recorded information is reproduced, the reproducing method is one in which a change in magnetic flux by magnetization on the recording medium is detected as a change in magneto-resistance.

As a heating process in thermomagnetic recording, heating by using a solid immersion lens, heating by evanescent light irradiation, or heating by an electric current flowing between a sharp probe and a recording medium may be adopted. Preferably, heating temperature and intensity of a magnetic field applied to the recording medium are simultaneously modulated. Also, preferably, in the process of heating by an electric current flowing between the sharp probe and the recording medium, an electric current flowing into the recording medium and a magnetic field applied to the recording medium are simultaneously modulated. Thus, satisfactory recording can be performed, a track width can be reduced, and higher density can be achieved.

A recording medium to which the method of magnetic recording in accordance with the present invention is applied is provided with a recording film including a substrate and a magnetic layer, and a track width is 0.35 µm or less. Also, the recording film includes a recording layer and a secondary recording layer. Preferably, the substrate is composed of silicon or silicon oxide.

### Brief Description of the Drawings

FIG. 1 is a sectional view showing a structure of a magnetic recording medium as a first embodiment of the present invention.
FIG. 2 is a diagram showing an apparatus for magnetic recording and reproducing with the first embodiment.
FIG. 3 is a sectional view showing a structure of a magnetic recording medium as a second embodiment of the present invention.
FIG. 4 is a diagram showing an apparatus for magnetic recording and reproducing with the second embodiment.
FIG. 5 is a sectional view showing a structure of a magnetic recording medium as a third embodiment of the present invention.
FIG. 6 is a diagram showing an apparatus for magnetic recording and reproducing with the third embodiment.

### Reference Numerals

- 11: substrate
- 12: underlying protective film
- 13: recording layer
- 14: secondary recording layer
- 15: upper protective film
- 16: lubricating layer
- 21: recording medium
- 22: coil for applying magnetic field
- 23: solid immersion lens
- 24: objective
- 25: laser beam
- 26: slider
- 27: recording magnetic domain
- 28: magnetic flux detecting means
- 13-a: underlying layer
- 13-b: cobalt layer
- 13-c: Pt layer
- 41: optical fiber

### Best Mode for Carrying Out the Invention

A method magnetic recording in accordance with the present invention will be described in detail with reference to the preferred embodiments shown in the attached drawings.

### (First Embodiment)

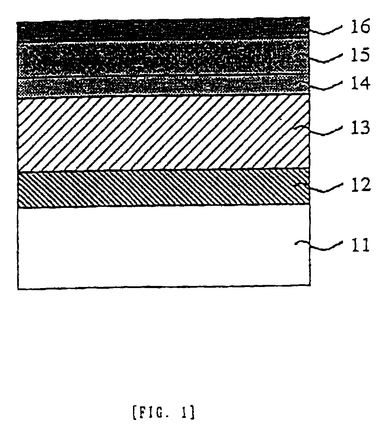

FIG. 1 is a sectional view showing a structure of a magnetic recording medium as a first embodiment which is suitable for magnetic recording in accordance with the present invention. After an underlying protective film 12 was formed on a silicon wafer substrate 11, a terbium-iron-cobalt alloy thin film was formed with a thickness of 200 Å as a recording layer 13, and then, a dysprosium-cobalt alloy thin film was formed with a thickness of 30 Å as a secondary recording layer 14, and an upper protective film 15 and a lubricating layer 16 were formed. The composition of the recording layer 13 was Tb₁₄Fe₈₂Co₄, and its Curie temperature was 165°C. The composition of the secondary recording layer 14 was Dy₂₉Co₇₁ and its Curie temperature was higher than 300°C. The suffixes in the composition indicate atomic percentages. The recording layer 13 and the secondary recording layer 14 were both composed of an amorphous alloy, and had perpendicular magnetic anisotropy. Magnetization of the recording layer 13 was 280 emu/cc. The underlying protective film 12 was composed of silicon nitride, and had a thickness of 100 Å. The upper protective film 15 was composed of an amorphous carbon hydride film, and had a thickness of 150 Å. The lubricating layer 16 was composed of a PFPE-based (perfluoropolyether-based) material, and had a thickness of approximately 20 Å. The recording film described above has been disclosed by the present inventors in Japanese Patent Publication Nos. 8-7215 and 8-77643. The characteristics of the recording film enable a satisfactory magnetic modulation record in magneto-optical recording with a significantly low applied magnetic field. Since the recording film has a large value of magnetization, information can be reproduced by detecting a change in magnetic flux. On the other hand, in the case of a rare-earth transition metal close to the compensation composition which is used in conventional thermomagnetic recording, the magnetization value at room temperature is significantly low at a composition close to that in which a satisfactory magnetic domain is formed. Therefore, it was virtually impossible to reproduce information in response to the change in magnetic flux. By using the two-layered magnetic film disclosed by the present inventors, the reproduction of information based on the change in magnetic flux from a medium thermomagnetically recorded with high density has been enabled for the first time.

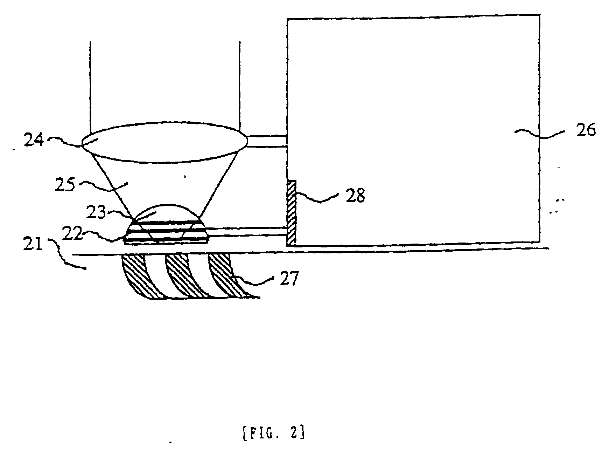

FIG. 2 shows an apparatus for magnetic recording and reproducing with the first embodiment which is suitable for high-density magnetic recording in accordance with the present invention. A head is divided into a recording means and a magnetic flux detecting means 28. The recording means includes a micro-regional heating means and a coil 22 for applying a magnetic field. The micro-regional heating means includes a doublet having a hemispherical solid immersion lens 23 which is placed so as to be in close contact with a recording medium. The effective NA of the two combined lenses is 0.85. The wavelength of a laser beam 25 that was used was 430 nm, and the spot size obtained on the recording medium was 0.35 µm. The doublet was mounted onto a slider 26, and the space between the surface of the medium and the solid immersion lens 23 was controlled so as to be 30 nm. The coil 22 for applying a magnetic field was placed on the periphery of the solid immersion lens 23. As the magnetic flux detecting means 28, a vertical-Type MR head was mounted on the slider. A structure in which only a magneto-sensitive portion of the magneto-resistance effect film was protruded toward the recording medium was used so that magnetic information in a track pitch of 0.2 µm or less could be reproduced.

By using the recording medium and the apparatus for recording and reproducing described above, recording and reproducing were performed. Recording was performed under the conditions with a recording radius of 10 mm, a rotational speed of 3,600 rpm, a recording frequency of 9.42 MHz, and a recording domain length of 0.2 µm. By moving the slider 26 along the radius, a track pitch of 0.3 µm was achieved. During recording, irradiation was performed at a constant laser power of 4.2 mW and the magnetic field was modulated with a duty factor of 50% to perform thermomagnetic recording. The intensity of the magnetic field was 150 Oe on the recording medium Reproduction was performed with the same linear velocity as that in recording, and an output voltage of 100 to 200 µ*N* was obtained. Also, when the recorded magnetic domain was observed with an MFM (Magnetic Force Microscope), it was confirmed that the magnetic domain had been formed with a width of 0.3 µm. When the temperature profile of the recording film was estimated by thermal simulation, the width of the region in which the temperature was higher than the Curie temperature of the recording layer was 0.31 µm. The width of the region in which the temperature was higher than the Curie temperature of the recording layer obtained by the simulation was substantially equal to the width of the magnetic domain finally formed. Accordingly, the heated region is slightly smaller than the beam spot, and is substantially equal to the width of the magnetic domain finally formed. Also, from the above results, it has been found that in accordance with the present invention a micro magnetic domain of 0.3 µm square or less can be satisfactorily recorded and reproduced.

Also, by using the same recording media and apparatus for recording and reproducing, recording was performed by changing the radiated laser into pulses during recording. The recording laser power was 7 mW, a pulse of 40 nsec was radiated in synchronization with switching of the magnetic field. The laser bottom power was 1 mW. With conditions other than the above being the same, thermomagnetic recording was performed and information was reproduced, and then, an output voltage of 100 to 200 µ*N* was obtained. As a result of observing the magnetic domain, the width of the magnetic domain was 0.25 µm. It has been confirmed that when the temperature caused by pulsed heating and the magnetic field are simultaneously modulated, satisfactory recording is also achieved, and when both are simultaneously modulated, the track width can be further reduced.

### (Second Embodiment)

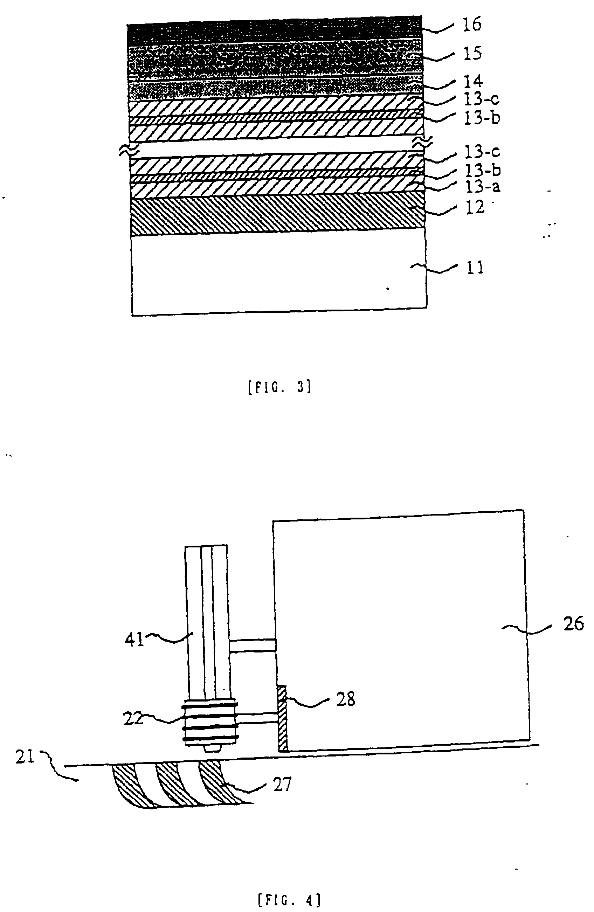

FIG. 3 is a sectional view showing a structure of a magnetic recording medium as a second embodiment which is suitable for magnetic recording in accordance with the present invention. After an underlying protective film 12 was formed on a silicon wafer substrate 11, a Pt film was formed with a thickness of 20 Å as an underlying layer 13-a, and then, a layered film including a cobalt layer (13-b) of 5 Å and a Pt layer (13-c) of 20 Å were deposited 7 times to form a recording layer. Then, a dysprosium-cobalt alloy thin film was formed with a thickness of 30 Å as a secondary recording layer 14, and an upper protective film 15 and a lubricating layer 16 were formed. The composition of the secondary recording layer 14 was Dy₂₉Co₇₁. The secondary recording layer 14 was composed of an amorphous alloy. The recording layer 13-a through c and the secondary recording layer 14 had perpendicular magnetic anisotropy. Magnetization intensity of the recording layer 13-a through c was 230 emu/cc, and its Curie temperature was 200°C. The coercive force was 1.5 kOe when a secondary recording layer was formed with a Pt/Co superlattice. The underlying protective film 12, the upper protective film 15, and the lubricating layer 16 were formed in the same way as that in the first embodiment.

FIG. 4 shows an apparatus for magnetic recording and reproducing with the second embodiment which is suitable for high-density magnetic recording in accordance with the present invention. In this embodiment, as a micro-regional heating means, an SNOM (Scanning Near-field Optical Microscope) head was used, in which the top of an optical fiber 41 was covered with aluminum and a micro-aperture was provided therein. The aperture was 80 nm in diameter. The laser used for recording had a wavelength of 680 nm and a constant power of 15 mW. The laser light radiated from the 80 nm aperture was evanescent light. A coil 22 for applying a magnetic field was placed in the periphery of the optical fiber 41. The recording means described above was fixed on a slider 26, and the distance between a recording medium 21 and the top of the fiber was adjusted so as to be 80 nm. As a magnetic flux detecting means 28, a vertical-Type MR head was mounted on the slider. A structure in which only a magneto-sensitive portion of the magneto-resistance effect film was protruded toward the recording medium was used so that magnetic information in a track pitch of 0.2 µm or less could be reproduced.

By using the recording medium and the apparatus for recording and reproducing, recording and reproducing were performed. Recording was performed under the conditions with a recording radius of 10 mm, a rotational speed of 120 rpm, a recording frequency of 314 kHz, and a recording domain length of 0.2 µm. By moving the slider along the radius, a track pitch of 0.2 µm was achieved. Thermomagnetic recording was performed by modulating the magnetic field with a duty factor of 50%. Reproduction was performed with the same linear velocity as that in recording, and an output voltage of 100 to 200 µ*N* was obtained. As a result of observation of the magnetic domain, the width of the magnetic domain was 0.2 µm. From the above results, it has been found that, in accordance with the present invention, a micro magnetic domain of 0.2 µm square or less can be satisfactorily recorded and reproduced.

### (Third Embodiment)

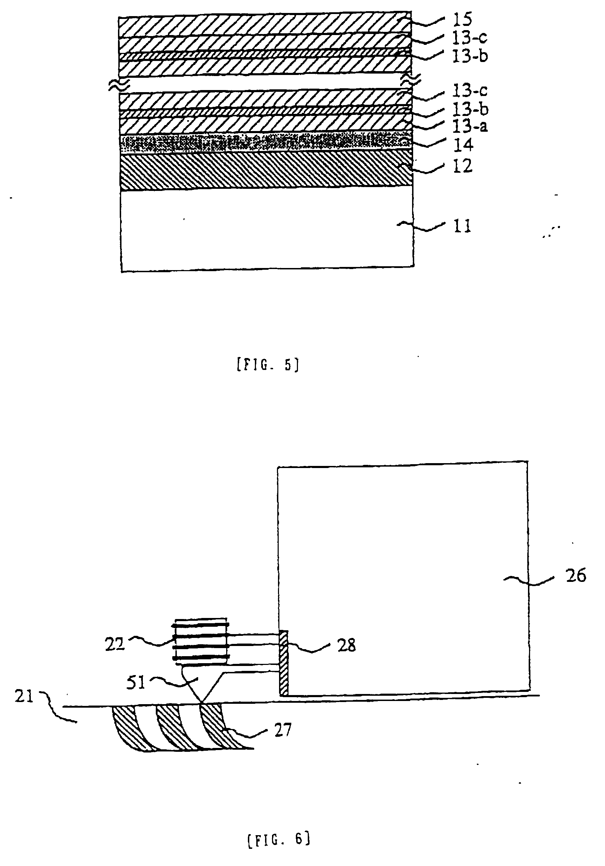

In this embodiment, the formation of a magnetic domain by heating with an electric current between a probe for pickup and a recording medium (for example, a tunnel current) will be described. FIG. 5 is a sectional view showing a structure of a magnetic recording medium as a third embodiment which is suitable for magnetic recording in accordance with the present invention. After an underlying protective film 12 was formed on a silicon wafer substrate 11, a dysprosium-cobalt alloy thin film was formed with a thickness of 35 Å as a secondary recording layer 14, and a Pt film was formed with a thickness of 20 Å as an underlying layer 13-a, and then, a layered film including a cobalt layer (13-b) of 5 Å and a Pt layer (13-c) of 20 Å were deposited 7 times to form a recording layer. Further, as an upper protective film 15, a Pt layer of 30 Å was formed. The composition of the secondary recording layer 14 was Dy₂₉Co₇₁. The recording layer 13-a through c and the secondary recording layer 14 had perpendicular magnetic anisotropy. Magnetization, coercive force, and Curie temperature of the recording layer 13-a through c were the same as those in the second embodiment. The underlying protective film 12 was formed under the same conditions as those in the first embodiment.

FIG. 6 shows an apparatus for magnetic recording and reproducing with the third embodiment which is suitable for high-density magnetic recording in accordance with the present invention. In this embodiment, as a micro-regional heating means, an STM (Scanning Tunnel Microscope) head was used. The curvature of the top of a probe was 200 Å. A recording film 21 was connected to ground, the probe 51 and the recording film 21 were brought close to each other, approximately 6 V was applied to the probe 51 as a pulse to send electric current, and simultaneously the direction of the magnetic field was changed to form a magnetic domain. As a magnetic flux detecting means 28, a vertical-Type MR head was mounted on the slider. A structure in which only a magneto-sensitive portion of the magneto-resistance effect film was protruded toward the recording medium was used so that magnetic information in a track pitch of 0.2 µm or less could be reproduced.

By using the recording medium and the apparatus for recording and reproducing, recording and reproducing were performed. Recording was performed under the conditions with a recording radius of 10 mm, a rotational speed of 60 rpm, a recording frequency of 157 kHz, and a recording domain length of 0.2 µm. By moving the slider along the radius, a track pitch of 0.2 µm was achieved. Reproduction was performed with the same linear velocity as that in recording, and an output voltage of 100 to 200 µ*N* was obtained. As a result of observation of the magnetic domain, the width of the magnetic domain was 0.15 µm. From the above results, it has been found that, in accordance with the present invention, a micro magnetic domain of 0.2 µm square or less can be satisfactorily recorded and reproduced.

In the first through the third embodiments, the formation of a micro-magnetic domain by using various heating means was described, however, the present invention is not limited to the disclosed embodiments, and, of course, the present invention is applicable to other cases in which heating is performed by other means.

## Claims

1. A method of magnetic recording for recording information by thermomagnetic recording onto a recording medium comprising a recording film comprising a substrate and a magnetic layer, wherein the width of a heating region per one track is set at 0.35 µm or less in said recording medium to record the information.

2. A method of magnetic recording according to Claim 1, wherein said recording film comprises two magnetic layers comprising a recording layer and a secondary recording layer.

3. A method of magnetic recording according to Claim 2, wherein the following formula is satisfied: Tc1 < Tc2, wherein Tc1 represents Curie temperature of said recording layer and Tc2 represents Curie temperature of said secondary recording layer.

4. A method of magnetic recording according to Claim 3, wherein the value of magnetization of said recording layer is 200 emu/cc or more.

5. A method of magnetic recording according to Claim 1, heating is performed by using a solid immersion lens.

6. A method of magnetic recording according to Claim 1, wherein heating is performed by radiating evanescent light.

7. A method of magnetic recording according to Claim 1, wherein heating is performed by an electric current flowing between a sharp probe and said recording medium.

8. A method of magnetic recording according to Claim 5 or 6, wherein heating temperature and intensity of a magnetic field applied to said recording medium are simultaneously modulated.

9. A method of magnetic recording according to Claim 7, wherein the electric current flowing into said recording medium and a magnetic field applied to said recording medium are simultaneously modulated.
